# EUROPEAN PATENT SPECIFICATION

(11) **EP 2 215 395 B1**
(45) Date of publication and mention of the grant of the patent: **26.10.2016**
(21) Application number: 08845791.6
(22) Date of filing: 28.10.2008
(51) Int. Cl.: F16L 55/132, F16J 15/02

(54) **PACKER WITH RIBS**
VERPACKUNGSGERÄT MIT RIPPEN
GARNITURE ÉTANCHE DE CONDUITE AVEC DES NERVURES

(30) Priority: 29.10.2007 NO 20075454
(43) Date of publication of application: 11.08.2010
(73) Proprietor: TDW Offshore Services AS, 4068 Stavanger (NO)
(72) Inventor: MELLEMSTRAND, Jone, 4354 Voll (NO); HELVIK, John, 4021 Stavanger (NO)
(74) Representative: Onsagers AS
(86) International application number: PCT/NO2008/000380
(87) International publication number: WO 2009/058021

(56) References cited:
- WO-A-2005/022012
- WO-A-2006/101398
- DE-A1- 3 821 649
- DE-U1- 8 816 607
- FR-A- 2 638 275
- GB-A- 2 161 993
- US-A- 2 685 380
- US-A- 2 853 773
- US-A1- 2007 023 096

## Description

The present invention relates to an arrangement comprising a plug for sealing against an inner wall of a pipeline, where the plug comprises a main body and sealing means actuated by actuation means.

Document US2007/0023096 A1 discloses a known sealing plug arrangement.

There is a general need for sealing off pipelines when performing maintenance, branching, repair etc. of for instance an already laid pipeline. There is also a need for the possibility of having means for sealing against an inner wall of a pipeline to separate a part of a pipeline from a production flow within the pipeline. Using a plug which is inserted into the pipeline, guided to the site to be sealed off and then set, is a procedure which is cost effective, flexible and possible in most pipelines. These plugs may be run into the pipeline with an umbilical or be autonomous plugs that are pigged and or moved by tractor units within the pipeline. Such an autonomous plug may for instance be used in long subsea pipelines for sealing these off at the desired site, and thereafter removed from the pipeline when the work is done.

There is also a general desire for plugs to use short time during setting of the plug and sealing off the pipeline.

There is an aim with the present invention to provide an arrangement at a plug which gives good sealing effect with an uneven inner surface of a pipeline, for instance a welded pipeline. There is also an aim to provide a plug which has a low self-locking pressure. Moreover, it is an object to improve the contact between the packer element and the inner wall of the pipeline.

These aims are achieved with an arrangement comprising plug as described in the following claims. Alternative aspects of the invention are stated in the dependent claims.

The present invention regards an arrangement comprising a plug for sealing against
an inner wall of a pipeline. This pipeline may be an oil-gas pipeline, a water line or other pipeline leading fluid from one position to another position. The plug comprises a main body, sealing means and actuation means for moving the sealing means from a retracted to an extended state in contact with an inner wall of the pipeline. The sealing means comprises an annular packer element, arranged between two relative movable body elements of the main body actuated by the actuation means. This arrangement may be self-locking due to pressure difference across the plug.

According to the invention the packer element comprises means in an outer peripheral surface formed by a first side of the packer element. This peripheral surface is facing a wall of a pipeline when the plug is positioned within a pipeline.

The means comprises at least one peripheral rib radially protruding from the first side of the packer element.

According to one aspect of the invention this at least one peripheral rib is arranged to come in initial contact with a wall of a pipeline before the main outer surface of the packer element comes in contact with the wall of the pipeline. According to another aspect this at least one peripheral rib is arranged to come in contact with a wall of a pipeline after at least a section of the main outer surface is in contact with the wall of the pipeline. Whether the one or the other of these two aspects, will depend on the choice of material in the rib and the outer surface of the packer element and also the geometrical arrangement of the rib in relation to the packer element, which will be explained in different aspects below.

In the case where the rib will form an initial contact with a wall of a pipeline before the main outer surface of the packer element comes in contact with the wall of the pipeline, the rib will form an initial sealing against the wall of the pipeline, which is established before the main sealing of the plug formed by the first side of the packer element. The peripheral rib may be formed with a material similar to the material forming the first side of the packer element or the peripheral rib may be formed by material with a different elasticity than the material forming the first side. In the case with a lower hardness (shore A) of the rib material compared to the material forming the outer surface of the packer element, the rib will to a larger extent than the rest of the packer form a sealing contact with a rough inner surface of the pipeline. The rib may be formed with an even elasticity or also be formed with changing elasticity through the rib in a radial, axial and or circumferential direction. There may also be one or more ribs with different elasticity or different geometrical shape arranged at the same packer element. The rib may also be formed with an outer surface facing the wall of the pipeline, which outer surface may be even or uneven.

According to one aspect the at least one peripheral rib may be positioned in at least one groove forming a section of the first side forming an outer peripheral surface of the packer element. By groove one should understand a section of the first side which is retracted in relation to the sections of the first side neighbouring this section forming the groove. However all the sections retracted or not, together forms the first side of the packer element. The groove will extend in the direction around the periphery in a similar manner as the peripheral rib. There may be one or more grooves in the first side. The grooves may have similar or different shapes seen in a cross section, the cross section may be mirrored about a radial axis or be non-symmetrical about a radial axis. The cross section may form a half square or rectangle, or be more rounded or semi-circular or a combination of these.

According to another aspect the at least one peripheral rib may comprise an outer surface or surface line, which in a non-expanded state of the packer element is positioned mainly in line with or radially within the first side of the packer element. By this one should understand that there is at least on section of the first side which is in line with an outer surface of the rib, or positioned radially outside an outer surface of the rib in a non-extended state of the packer element. In another embodiment the outer surface of the rib may extend radially outside an outer section of the first side in a non-expanded state of the packer element. The first side may comprise sections at several distances from a centre point of the packer element. According to another aspect there may be at least one peripheral rib within each groove. There may be one rib in each groove or more ribs in one groove and one in another groove. In the case with one groove and two ribs the ribs may be positioned in two axially outermost positions within the groove, or spaces apart and also spaced from the radial side surfaces of the groove. Another possibility is to have the ribs abutting each other. Another possibility is that at least on peripheral rib mainly fills a groove in the first side of the packer element, or to have combinations of the above.

According to an aspect the at least one groove may be formed substantially in the central part of the first side. There may possibly also be grooves arranged symmetrical about a radial centre plane for the packer element, or combinations of this. There may also be a helical groove and rib arranged in the first side of the packer element.

The packer element in a cross section transverse to a circumferential direction forms a mainly four sided shape in a retracted position. In this that the packer element comprises two sections with larger rigidity than the rest of the packer element, formed in two corners of the cross section of the packer element, which two corners are the two outward facing corners. These two sections are provided with springs embedded in the material forming the packer element, thereby forming more rigid parts of the packer element. It is also possible to provide the ribs with variable elasticity around the circumference of the packer element. Another possibility is to provide the packer element with sections of ribs around the circumference, where these sections of ribs may overlap, or the ribs may be formed by a spiral arranged around the circumference of the packer element, possibly within one groove, which groove itself forms a spiral or an annular shaped groove with a spiral rib within that annular shaped groove, or where the ribs may form any patter in the first side of the packer element. The rib may also have a width in the axial direction of the packer at least partly covering the side of the packer facing the pipeline.

The present invention will now be explained with further embodiments of the invention and with reference to the accompanying drawings, where:
Fig. 1 shows a plug for sealing off a pipeline with an arrangement example in a retracted state;
Figs. 2A, 2B and 2C illustrate another example of the packer element of the plug in fig. 1;
Figs. 3A, 3B and 3C illustrate another example of the packer element of the plug in fig. 1;
Figs. 4A, 4B and 4C illustrate another example a third embodiment of the packer element of the plug in fig. 1; and
Fig. 5 illustrates a fourth embodiment of the packer element of the plug in fig. 1.
Fig. 6A, 6B, 6C and 6D illustrate a fifth embodiment of the packer element of the plug in fig. 1.

In the description below, the same reference numbers are used for similar elements with similar functions.

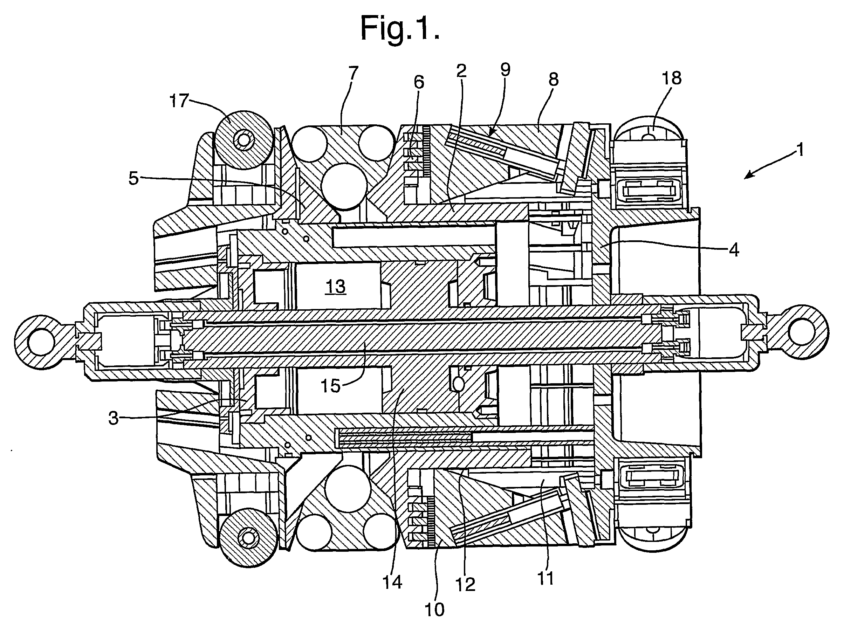

In fig. 1 there is shown an example of a plug 1 in a retracted state outside a pipeline. The plug 1 comprises a main body 2, comprising of a first end plate 3 and a second end plate 4, which end plates 3, 4 are exposed to the fluid at the two different sides of the plug in a set state of the plug 1 within a pipeline, a first body element 5 and a second body element 6 arranged to be movable relative each other by movement in a longitudinal axis of the plug 1. The first body element 5 is arranged on one side of an annular shaped packer element 7 and the second body element 6 is arranged on the opposite side of the packer element 7, and when these are moved towards each other the packer element 7 is pushed outwards into contact with a pipeline wall, i.e. the extended state. The shown plug 1 also comprises anchoring means in the form of slips 8 arranged around the circumference of the main body 2 in abutment against a bowl surface 9 for relative movement between this and the slips 8 to move the slips 8 outwards into contact with a pipeline wall. In this embodiment the bowl surface 9 is formed by a first wedge means 10 in abutment against second wedge means 11, which is abutting a body surface 12, which all interact with each other to move the bowl surface 9 in an outwards direction during the setting of the slips 8. By such an arrangement one achieves a rapid radially outwards movement of the slips and they may be set at any position in this movement. The plug may comprise anchoring means with a bowl surface formed directly by a plug body element without the wedge means. The plug comprises further actuation means in the form of a centrally located cylinder and piston arrangement with a cylinder chamber 13 arranged centrally within the main body 2. Within the cylinder chamber 13 there is arranged a piston head 14 with a piston rod 15 which is through going the whole of the piston chamber 13 and out through the end plates 3, 4 with connection means 16 on both ends of the piston rod 15. The plug 1 further comprises first centralising means 17 arranged around the circumference of the plug body 2 close to the first end plate 3 and in a similar manner second centralising means 18 close to the second end plate 4. The relative movable elements of the main body 2 are connected to each other by for instance T-shaped protrusions and grooves. The plug will further comprise necessary sealing elements between the elements in the plug, fluid lines and valves etc for operation of the piston/cylinder arrangement and other means for operation of the plug which will be evident for a skilled person and which elements are not a part of the invention and therefore not explained in further detail.

### First example

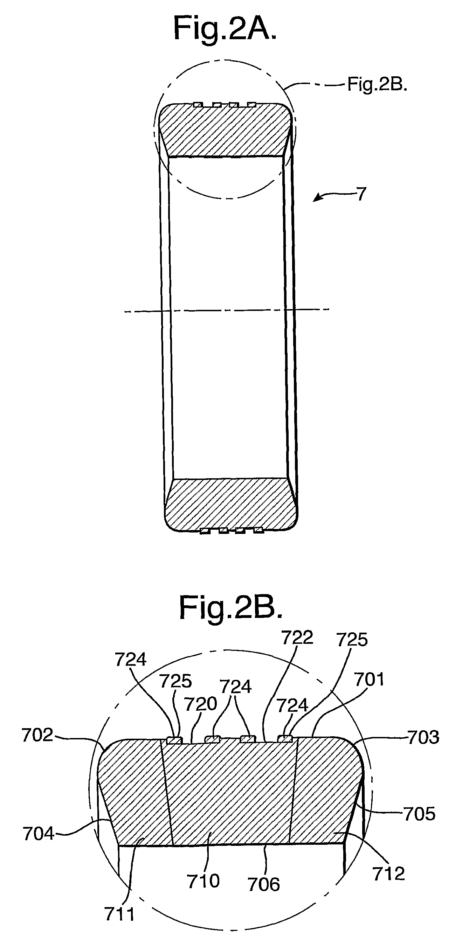

It is now referred to fig. 2A, illustrating a packer element 7 in a retracted state for use with the plug in fig. 1.

In a cross section transverse to a circumference, as shown in fig. 2B, the packer element 7 has substantially four sides. A first side 701 of the packer element 7 will in the extended state at least partly be in contact with the inner wall of the pipeline, where the first side 701 is limited by a first apex 702 and a second apex 703. The packer element 7 has a second side 704 and a third side 705 defined between an inner side 706 and the first apex 702 and the second apex 703 respectively. This second side 704 forms an angle with a radial plane, also the third side 705 forms an angle with a radial plane, where radial inner sections of these sides 704,705 are closer to each other than radial outer sections of these sides 704,705, forming a partly V-shape. This partly V-shape could be symmetrical but might also be lop-sided. As shown in fig. 2B, the first side 701 and the inner side 706 are substantially parallel to each other.

For high pressure applications, the packer element 7 comprises a first section 710 positioned in the middle, and a second section 711 and a third section 712 positioned on each side of the first section 710. All these three sections have an extension in the circumferential direction, in addition to the extensions in the radial and axial directions. The first section 710 is at least partly made of a softer material than the second and third sections 711, 712. In this way, it is provided that the first section 710 is expanding in the radial direction, i.e. towards the inner surface of the pipeline, during setting. The harder materials of the second and third sections 711, 712 will also abut the pipeline in a set position of the plug but will also prevent the first section 710 from expanding in the axial direction.

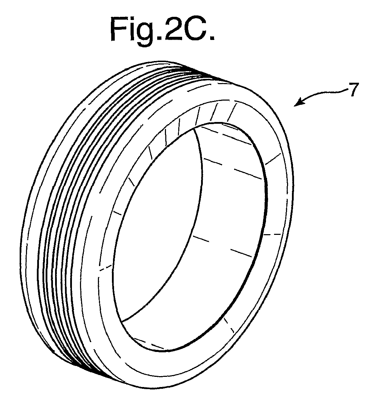

A first groove 720 and a second grove 722 are provided in the outer peripheral surface of the packer element 7, i.e. of the first side 701. The first groove 720 and the second groove 722 form retracted sections of the first side 701. In fig. 2C it is shown that the first and second grooves 720, 722 extend around the entire periphery of the packer element 7. The first and second grooves 720, 722 are provided substantially in the central part of the first side 701, for example in the first section 710 mentioned above.

Moreover, peripheral ribs 724 are provided, protruding from the first side 701 of the packer element 7, and forming edges to the first and second grooves 720, 722 as they are positioned within the grooves but axially spaced apart within the grooves and abutting the sides of the grooves at opposite sides. As shown in fig. 2B, four peripheral ribs 724 are provided. An outer surface 725 is in this embodiment arranged outside an outer section of the first side 701.

The peripheral ribs 724 could be made of the same material as the first section 710 of packer element 7, i.e. the softer material than the rest of the packer, or they may even be made of an even more soft material.

### Second example

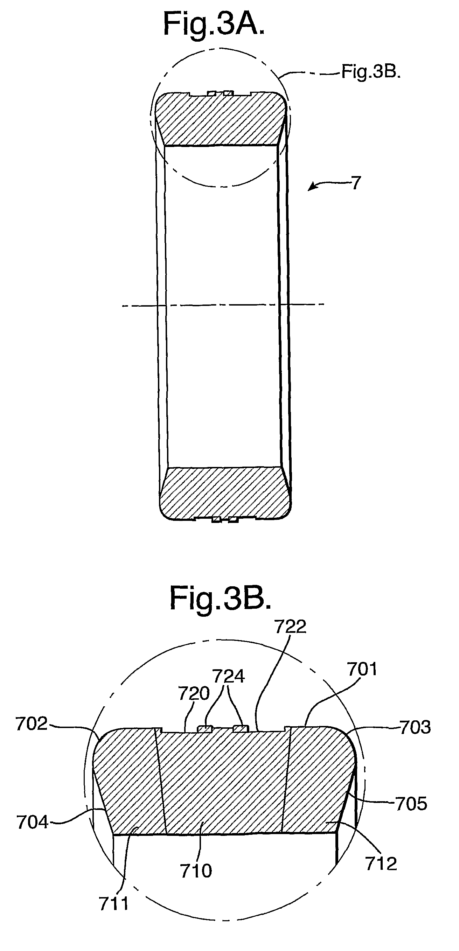

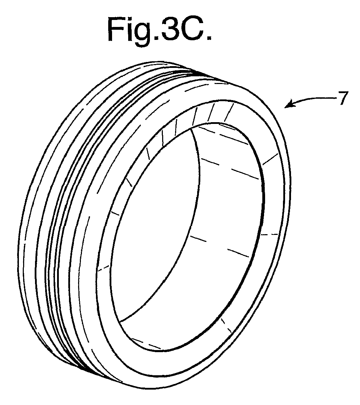

It is now referred to fig. 3A, illustrating a packer element 7 in retracted state for use with the plug in fig. 1. Many of the features of the second embodiment are similar to the first embodiment, and those features will consequently not be described in detail here.

Also in the present embodiment, a first groove 720 and a second grove 722 are provided in the outer peripheral surface of the packer element 7, i.e. of the first side 701, as shown in fig. 3B.

However, only two peripheral ribs 724, protruding from the first side 701 of the packer element 7, are provided in the present embodiment. The two ribs 724 are each forming one edge to the first and second grooves 720, 722, respectively.

Also here, the peripheral ribs 724 are made of the same material as the first section 710 of packer element 7, i.e. the softer material.

### Third example

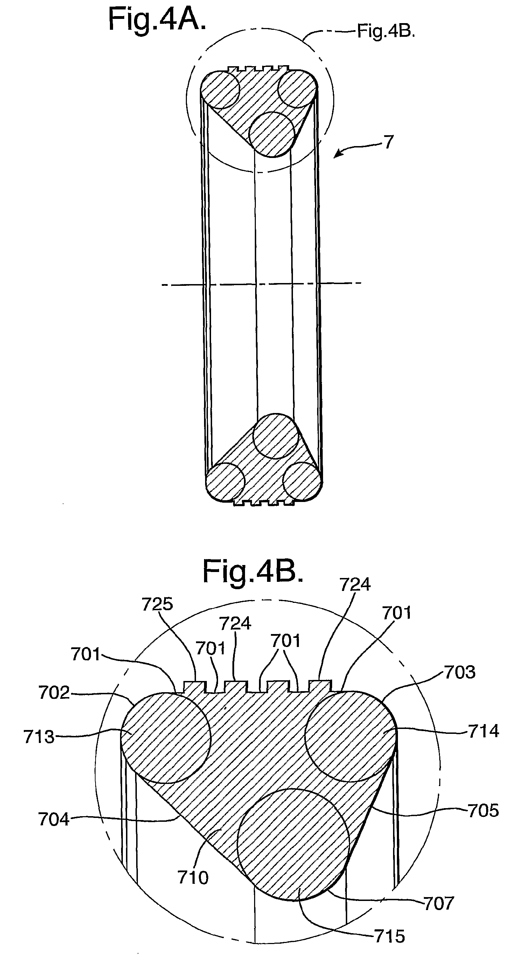

It is now referred to fig. 4A, illustrating a packer element 7 in retracted state for use with the plug in fig. 1.

In a cross section transverse to a circumference, as shown in fig. 4B, the packer element 7 is substantially triangular. A first side 701 of the packer element 7 will in the extended state be in contact with the inner wall of the pipeline, where the first side 701 is limited by a first apex 702 and a second apex 703. The packer element 7 has second side 704 defined between the first apex 702 and a third apex 707 and a third side 705 defined between the second apex 703 and the third apex 707.

As seen in fig. 4B, the cross section of the packer element 7 is not symmetrical about a radial axis, as the second side 704 is longer than the third side 705. However, it should be noted that the packer element 7 will have a different cross sectional appearance in the extended state.

Moreover, the apex 707 forms the innermost part of the packer element 7 in the radial direction.

In the third embodiment the packer element 7 comprises a first section 710. Moreover, the packer element 7 comprises a second section 713, a third section 714 and a fourth section 715, where these sections are made of a material having a larger rigidity than the first section 710. In fig. 4B, it is shown that the second section 713, the third section 714 and the fourth section 715 are provided as circular elements near the first apex 701, the second apex 703 and the third apex 707 respectively.

The increased rigidity can be achieved by embedding spring elements in these sections 713, 714, 715 of the packer element.

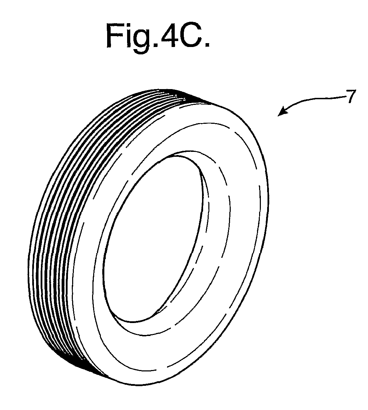

In the present embodiment, several ribs 724 are provided at intervals in the outer peripheral surface of the packer element 7, i.e. of the first side 701. In fig. 4C it is shown that four ribs 724 extend around the entire periphery of the packer element 7. The four ribs 724 have an outer surface 725, in this case arranged outside an outer section of the first side 701. The ribs 724 are mainly equal and with mainly equal spacing between them.

### First embodiment

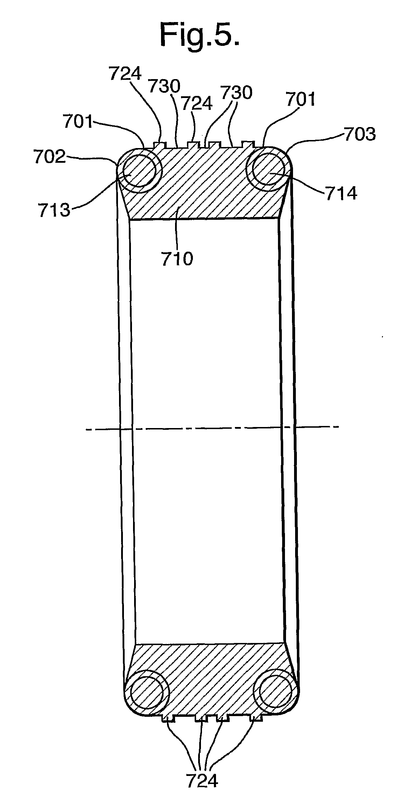

It is now referred to fig. 5, illustrating a packer element 7 in retracted state for use with the plug in fig. 1. Many of the features of the fourth embodiment are similar to the first and second embodiment, and those features will consequently not be described in detail here. For example, in a cross section transverse to a circumference, as shown in fig. 5, the packer element 7 has substantially four sides, similar to the first and second example.

In the present embodiment, the packer element 7 comprises a first section 710. Moreover, the packer element 7 comprises a second section 713 and a third section 714, where these sections are made of a material having a larger rigidity than the first section 710. In fig. 5, it is shown that the second section 713 and the third section 714 are provided as circular elements near the first apex 702 and the second apex 703 respectively.

The increased rigidity can be achieved by embedding spring elements in these sections 713, 714 of the packer element.

In the present embodiment, several ribs 724 are provided at intervals in the outer peripheral surface of the packer element 7, i.e. of the first side 701. In fig. 5 it is shown that four ribs 724 extend around the entire periphery of the packer element 7. The ribs 724 are arranged with different spacing between them.

### Second embodiment

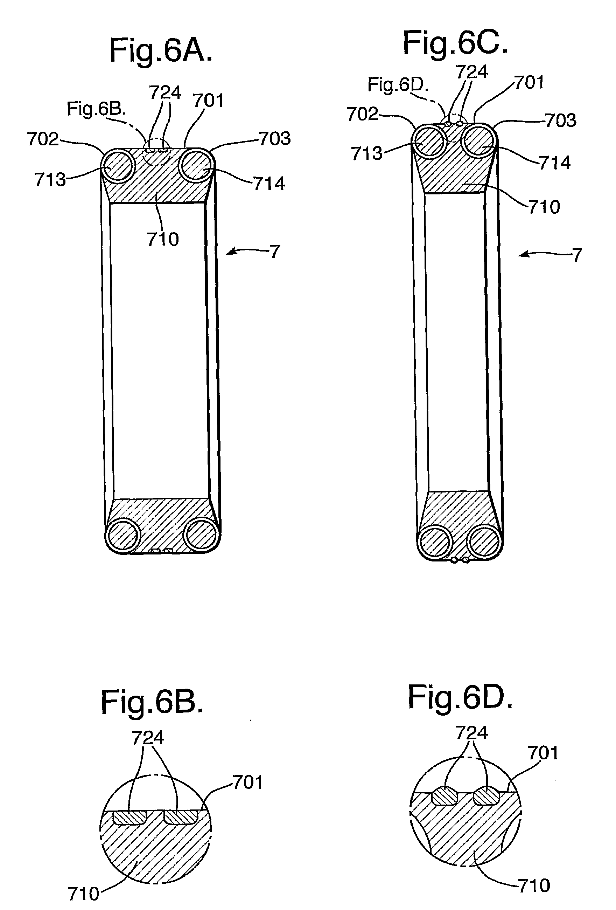

Figs. 6A and 6B are cross sectional drawings illustrating a fifth embodiment of the packer element 7 shown in an non-expanded state. Fig. 6B is an enlargement of the encircled portion B in fig. 6A. Figs. 6C and 6D are cross sectional drawings illustrating the fifth embodiment of the packer element 7 shown in an expanded state. Fig. 6D is an enlargement of the encircled portion D in fig. 6C. Several of the features of this fifth embodiment are similar to the embodiments discussed above, and those features need consequently not be described in detail here. For example, in a cross section transverse to a circumference, as shown in figs. 6A and 6C, the packer element 7 has substantially four sides, similar to the first, second examples and fourth embodiment.

Similarly to the embodiments described previously, the packer 7 comprises a first side 701 which, when the packer is in use, is facing the pipeline inner wall and in the extended state at least partly is in contact with the pipeline inner wall.

In the fifth embodiment, the packer element 7 comprises a first section 710. Moreover, the packer element 7 comprises a second section 713 and a third section 714, where these sections are made of a material having a larger rigidity than the first section 710. In figs. 6A and 6C it is shown that the second section 713 and the third section 714 are provided as circular elements near the first apex 702 and the second apex 703 respectively. The increased rigidity can be achieved by embedding spring elements in these sections 713, 714 of the packer element.

In the present embodiment, ribs 724 are provided in the outer peripheral surface of the packer element 7, i.e. of the first side 701. The ribs 724 extend around the entire periphery of the packer element 7 and are arranged with an axial spacing between them, as shown in figs. 6A-6D.

The peripheral ribs 724 of this fifth embodiment could be made of the same material as the first section 710, i.e. the softer material than the rest of the packer element 7, or the ribs 724 may be made of an even more soft material than that of the first section 710.

As is evident from figs. 6a and 6B, the peripheral ribs 724 comprise an outer surface or surface line which in a non-expanded state of the packer element is positioned mainly in line with or radially within the first side 701 of the packer element 7. There is at least one section of the first side 701 which is in line with an outer surface of the ribs 724 in a non-extended state of the packer element. Figs 6A and 6B show that the peripheral ribs 724 are not protruding substantially beyond the outer surface of the first side 701 when the packer element is in an non-expanded state.

When the packer element 7 is moved to the expanded state in order to set the packer in a pipeline, the ribs 724 are subjected to pressures in both the radial and the axial directions, by the surrounding sections comprising material having a greater hardness than the material of the ribs 724. The ribs 724 are thus raised above the first side 701 and will make contact with the pipe inside wall when the packer is thus installed. This expanded state is illustrated by figs. 6C and 6D (without pipe).

In the embodiments discussed above, the skilled person will understand that fewer and more ribs may be required, depending on the application.

## Claims

1. Arrangement comprising a plug (1) for sealing against an inner wall of a pipeline (30), wherein the plug comprises a main body, sealing means and actuation means for moving the sealing means from a retracted to an extended state in contact with the inner wall of the pipeline, said sealing means comprising an annular packer element (7), arranged between two relative movable body elements (5,6) of the main body actuated by the actuation means, wherein the packer element (7) in a cross section transverse to a circumferential direction forms a mainly four sided shape in a retracted position, and wherein the packer element (7) comprises a first section (710) and at least a second section (711;713) and a third section (712;714,715), said second and third sections having a material with a larger rigidity than that of the first section, said second and third sections being formed in two outward facing corners of the cross-section of the packer element (7) and are provided with springs embedded in the material forming the packer element, and means (720,722,724) in an outer peripheral surface formed by a first side (701) of the packer element (7), which means comprises at least one peripheral rib (724) connected to the first side (701) of the first section (710) of the packer element (7).

2. Arrangement according to claim 1, **characterised in that** the at least one peripheral rib (724) is arranged to come in initial contact with a wall of a pipeline before the main outer surface (701) of the packer element (7) comes in contact with the wall of the pipeline.

3. Arrangement according to claim 1, **characterised in that** the at least one peripheral rib (724) is arranged to come in contact with at wall of a pipeline after at least a section of the main outer surface (701) is in contact with the wall of the pipeline.

4. Arrangement according to claim 1, **characterised in that** the at least one peripheral rib (724) is positioned in at least one groove (720,722) forming a section of a first side (701) forming an outer peripheral surface of the packer element (7).

5. Arrangement according to claim 1, **characterised in that** at least one peripheral rib (724) comprises an outer surface, which in an non-expanded state of the packer element (7) is positioned mainly in line with or radially within an outer section of the first side (701) of the packer element (7).

6. Arrangement according to claim 4, **characterised in that** there is at least one peripheral rib (724) within each groove (720,722).

7. Arrangement according to claim 4, **characterised in that** at least one peripheral rib (724) mainly fill a groove (720,722) in the first side (701).

8. Arrangement according to claim 4, **characterised in that** the peripheral rib (724) is forming an edge to the at least one groove.

9. Arrangement according to claim 4, **characterised in that** the at least one groove is formed substantially in the central part of the first side (701).

## Patentansprüche

1. Anordnung, die einen Stopfen (1) zum Abdichten gegenüber einer Innenwand einer Rohrleitung (30) aufweist, wobei der Stopfen einen Hauptkörper, eine Dichtungseinrichtung und eine Betätigungseinrichtung aufweist, um die Dichtungseinrichtung aus einem zurückgezogenen Zustand in einen ausgefahrenen Zustand in Kontakt mit der Innenwand der Rohrleitung zu bewegen, wobei die Dichtungseinrichtung ein ringförmiges Dichtungselement (7) aufweist, das zwischen zwei relativ zueinander beweglichen Körperelementen (5, 6) des Hauptkörpers angeordnet ist, die mit der Betätigungseinrichtung betätigt werden,
wobei das Dichtungselement (7) im Querschnitt quer zu einer Umfangsrichtung eine im Wesentlichen vierseitige Gestalt in einer zurückgezogenen Stellung bildet, und wobei das Dichtungselement (7) einen ersten Bereich (710) und mindestens einen zweiten Bereich (711; 713) und einen dritten Bereich (712; 714, 715) aufweist, wobei der zweite Bereich und der dritte Bereich ein Material mit einer größeren Steifigkeit als der des ersten Bereiches aufweisen, wobei der zweite Bereich und der dritte Bereich in zwei nach außen weisenden Ecken des Querschnitts des Dichtungselements (7) ausgebildet und mit Federn ausgerüstet sind, die in das Material eingebettet sind, welches das Dichtungselement bildet, und wobei eine Einrichtung (720, 722, 724) in einer Außenumfangsfläche ausgebildet ist, die von einer ersten Seite (701) des Dichtungselementes (7) gebildet ist, wobei die Einrichtung mindestens eine Umfangsrippe (724) aufweist, die mit der ersten Seite (701) des ersten Bereiches (710) des Dichtungselementes (7) verbunden ist.

2. Anordnung nach Anspruch 1,
**dadurch gekennzeichnet,**
**dass** die mindestens eine Umfangsrippe (724) derart angeordnet ist, dass sie mit einer Wand einer Rohrleitung in einen Anfangskontakt kommt, bevor die Hauptaußenfläche (701) des Dichtungselementes (7) mit der Wand der Rohrleitung in Kontakt kommt.

3. Anordnung nach Anspruch 1,
**dadurch gekennzeichnet,**
**dass** die mindestens eine Umfangsrippe (724) derart angeordnet ist, dass sie mit einer Wand einer Rohrleitung in Kontakt kommt, nachdem zumindest ein Bereich der Hauptaußenfläche (701) mit der Wand der Rohrleitung in Kontakt steht.

4. Anordnung nach Anspruch 1,
**dadurch gekennzeichnet,**
**dass** die mindestens eine Umfangsrippe (724) in mindestens einer Nut (720, 722) angeordnet ist, welche einen Bereich einer ersten Seite (701) bildet, die eine Außenumfangsfläche des Dichtungselementes (7) bildet.

5. Anordnung nach Anspruch 1,
**dadurch gekennzeichnet,**
**dass** die mindestens eine Umfangsrippe (724) eine Außenfläche aufweist, die in einem nicht-expandierten Zustand des Dichtungselementes (7) hauptsächlich in einer Linie mit oder radial innerhalb von einem äußeren Bereich der ersten Seite (701) des Dichtungselements (7) positioniert ist.

6. Anordnung nach Anspruch 4,
**dadurch gekennzeichnet,**
**dass** mindestens eine Umfangsrippe (724) innerhalb jeder Nut (720, 722) ausgebildet ist.

7. Anordnung nach Anspruch 4,
**dadurch gekennzeichnet,**
**dass** mindestens eine Umfangsrippe (724) eine Nut (720, 722) in der ersten Seite (701) im Wesentlichen ausfüllt.

8. Anordnung nach Anspruch 4,
**dadurch gekennzeichnet,**
**dass** die Umfangsrippe (724) eine Kante für die mindestens eine Nut bildet.

9. Anordnung nach Anspruch 4,
**dadurch gekennzeichnet,**
**dass** die mindestens eine Nut im Wesentlichen in dem mittleren Teil der ersten Seite (701) ausgebildet ist.

## Revendications

1. Agencement comprenant un bouchon (1) pour réaliser l'étanchéité contre une paroi interne d'une conduite (30), dans lequel le bouchon comprend un corps principal, des moyens d'étanchéité et des moyens d'actionnement pour faire passer les moyens d'étanchéité d'un état rétracté à un état étendu en contact avec la paroi interne de la conduite, lesdits moyens d'étanchéité comprenant un élément de garniture d'étanchéité (7) agencé entre deux éléments de corps mobiles relatifs (5, 6) du corps principal actionnés par les moyens d'actionnement,
dans lequel l'élément de garniture d'étanchéité (7) dans une section transversale, transversale par rapport à une direction circonférentielle, forme une forme principalement à quatre côtés dans une position rétractée, et dans lequel l'élément de garniture d'étanchéité (7) comprend une première section (710) et au moins une deuxième section (711; 713) et une troisième section (712; 714, 715), lesdites deuxième et troisième sections ayant un matériau avec une plus grande rigidité que celle de la première section, lesdites deuxième et troisième sections étant formées dans deux coins orientés vers l'extérieur de la section transversale de l'élément de garniture d'étanchéité (7) et sont prévues avec des ressorts encastrés dans le matériau formant l'élément de garniture d'étanchéité et des moyens (720, 722, 724) dans une surface périphérique externe formée par un premier côté (701) de l'élément de garniture d'étanchéité (7), lesquels moyens comprennent au moins une nervure périphérique (724) raccordée au premier côté (701) de la première section (710) de l'élément de garniture d'étanchéité (7).

2. Agencement selon la revendication 1, **caractérisé en ce que** la au moins une nervure périphérique (724) est agencée pour venir en contact initial avec une paroi d'une conduite, avant que la surface externe principale (701) de l'élément de garniture d'étanchéité (7) ne vienne en contact avec la paroi de la conduite.

3. Agencement selon la revendication 1, **caractérisé en ce que** la au moins une nervure périphérique (724) est agencée pour venir en contact avec une paroi d'une conduite, après au moins qu'une section de la surface externe principale (701) a été en contact avec la paroi de la conduite.

4. Agencement selon la revendication 1, **caractérisé en ce que** la au moins une nervure périphérique (724) est positionnée dans au moins une rainure (720, 722) formant une section d'un premier côté (701) formant une surface périphérique externe de l'élément de garniture d'étanchéité (7).

5. Agencement selon la revendication 1, **caractérisé en ce que** la au moins une nervure périphérique (724) comprend une surface externe qui, dans un état non expansé de l'élément de garniture d'étanchéité (7), est positionnée principalement alignée avec ou radialement à l'intérieur d'une section externe du premier côté (701) de l'élément de garniture d'étanchéité (7).

6. Agencement selon la revendication 4, **caractérisé en ce qu'**il y a au moins une nervure périphérique (724) à l'intérieur de chaque rainure (720, 722).

7. Agencement selon la revendication 4, **caractérisé en ce qu'**au moins une nervure périphérique (724) remplit principalement une rainure (720, 722) dans le premier côté (701).

8. Agencement selon la revendication 4, **caractérisé en ce que** la rainure périphérique (724) forme un bord par rapport à la au moins une rainure.

9. Agencement selon la revendication 4, **caractérisé en ce que** la au moins une rainure est formée sensiblement dans la partie centrale du premier côté (701).
